# EUROPEAN PATENT SPECIFICATION

(11) **EP 1 764 016 B1**
(45) Date of publication and mention of the grant of the patent: **04.08.2010**
(21) Application number: 05255615.6
(22) Date of filing: 14.09.2005
(51) Int. Cl.: A47J 37/12

(54) **Electrically-heated appliance**
Elektrisch beheiztes Gerät
Appareil à chauffage électrique

(43) Date of publication of application: 21.03.2007
(73) Proprietor: ELECTRICAL INVESTMENTS LIMITED, Tortola (VG)
(72) Inventor: Chung, Chi Yin C/o P.O.Box 71, Tortola (VG); Law, Kam Shan C/o P.O.Box 71, Road Town, Tortola (VG)
(74) Representative: Wombwell, Francis

(56) References cited:
- US-A- 5 524 527
- US-A1- 2003 047 554
- US-B1- 6 341 555
- US-B1- 6 365 878
- US-B1- 6 742 444
- PATENT ABSTRACTS OF JAPAN vol. 016, no. 261 (C-0950), 12 June 1992 (1992-06-12) & JP 04 061823 A (MATSUSHITA ELECTRIC IND CO LTD), 27 February 1992 (1992-02-27)

## Description

The present invention relates to electrically-heated appliances, more particularly of the type having a removable bowl incorporating a heating element, a particular example of which is a deep fat fryer, for example, for domestic use.

Known deep fat fryers normally comprise a metal container or bowl for containing the fat or oil in which food is to be fried, the container being heated by an electrical heating element associated therewith and normally secured to the underside of the bowl. An example of a prior art appliance of this type can be seen in UK Patent No. GB 2321178B (Kenwood Marks Limited), which is primarily directed to means for ensuring adequate thermal contact for respective cylindrical probes, incorporating a thermostat and a thermal fuse for monitoring and controlling the temperature of the fryer and preventing overheating. However, due to the removable nature of such probes, it has been determined that such might have various problems. For example, with this type of arrangement, the sensing probes have to be located near the base of the bowl, which location is good for sensing the heat from oil during normal frying, but is not always sufficiently sensitive to sense the heat from the heating element, so that in an abnormal test, e.g. according to IEC 335532-13-clause 19.3, the oil can be overheated (greater than 295° C) before the thermostat opens to cut off the electrical supply. In order to pass the requirement of clause 19.3, the heating element is often bent to lie closer to the sensing probe, but in a normal frying condition, with such a design, the oil temperature can be lower than the standard requirement, since the heat from the heating element would dominate the sensitivity of the thermostat. In practice, manufacturers are often willing to compromise the effectiveness of the thermostat for monitoring and controlling the temperature of the oil, in order to ensure that they adequately pass the requirements of clause 19.3. Whilst this produces a safe result, this can also compromise the effectiveness of the fryer performance.

A further problem with the use of conventional sensing probes is that a hollow cylindrical tube accommodating the thermostat and thermal fuse has a relatively small thermal contact area with the base of the bowl and therefore does not effectively receive the heat therefrom. Additionally, since the sensing probes are usually provided in a connector module, which is attached to receiving means provided on the base of the bowl, poor alignment between the probes and the attachment means can easily occur with improper use and further reduce the sensitivity of the probes.

In general, there are two types of removable bowl fryers, a first type of which includes a power module built into the fryer housing, from which the bowl can be removed by lifting such vertically from the housing. With such an arrangement, the fryer bowl can then be cleaned, for example in a dishwasher. However, due to the incorporation of a power module into the fryer housing, such cannot be similarly cleaned. A second type, as illustrated in GB 2321178B, includes a fryer housing having a removable bowl and a removable power module, in which the bowl can be removed vertically from the housing, whilst the power module can be slid laterally from the fryer housing, so that both the fryer housing and the bowl can be cleaned, for example, in a dishwasher. However, with this arrangement, the power module has to be removed first, to enable the bowl to be removed from the fryer housing.

Another prior art electrically-heated appliance is shown in document US 2003/0047554 A.

It is an object of the present invention to endeavour to overcome the above disadvantages of prior art electrically-heated appliances, and in particular, deep fat fryers.

According to the present invention, there is provided an electrically-heated appliance as described and claimed in the appended claims.

The present invention will now be described further, by way of example, with reference to the accompanying drawings, in which:-
Figure 1 is a view of the underside of a removable bowl and power module;

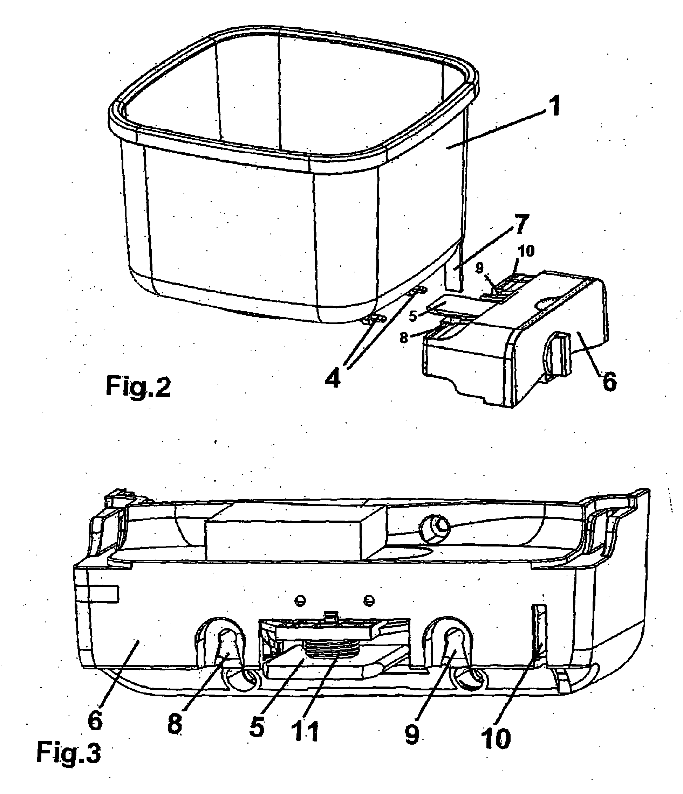

Figure 2 is a perspective view of the bowl and power module of Figure 1;
Figure 3 shows the power module;

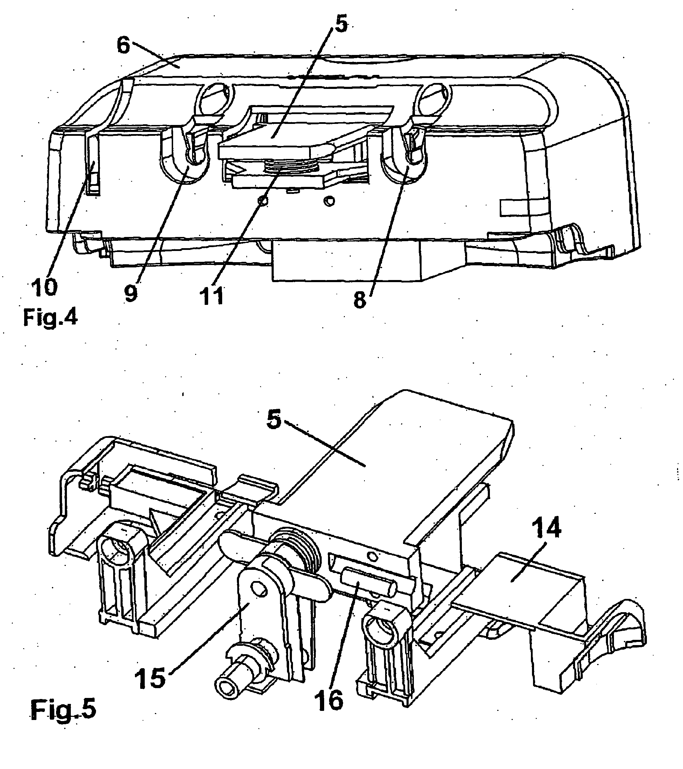

Figure 4 illustrates an alternative view of the power module;
Figure 5 illustrates the internal components of the power module;

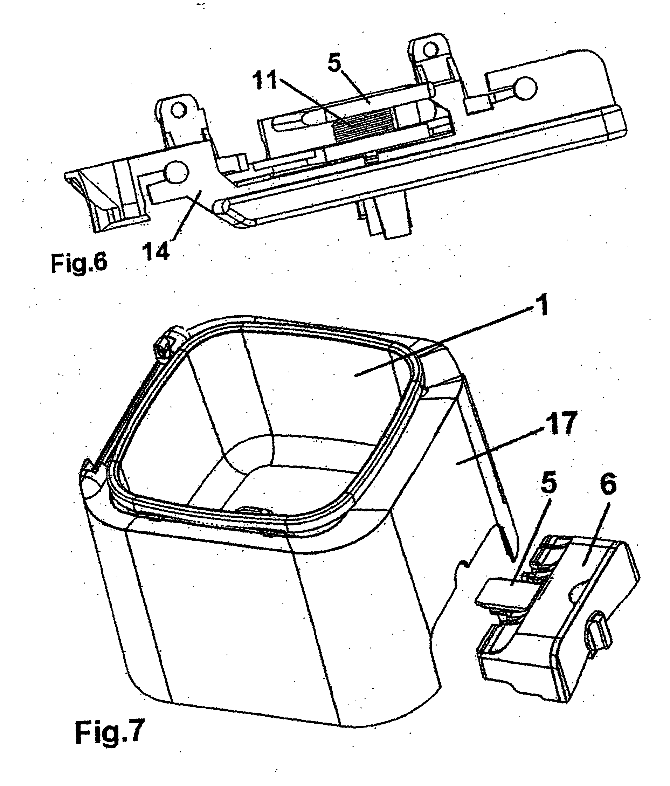

Figure 6 is an alternative view of the internal components of the power module;
Figure 7 shows the removable bowl installed in a housing prior to installation of the connecting module; and

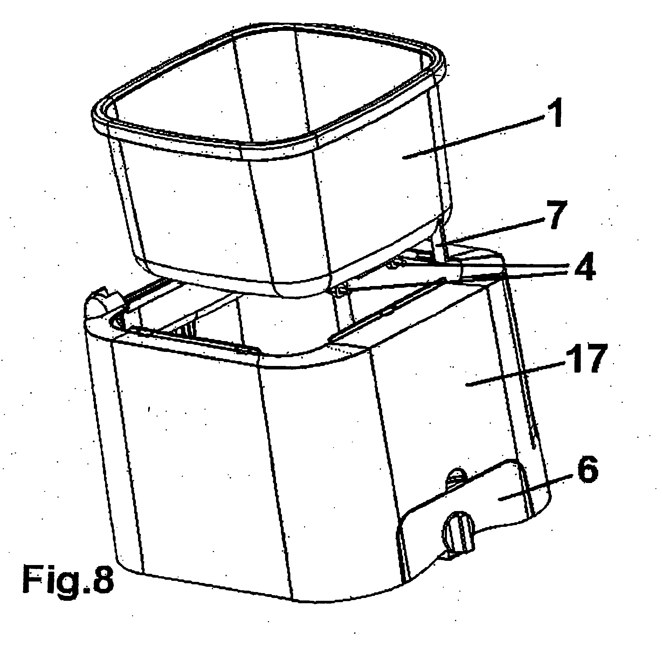

Figure 8 illustrates removal of the removable bowl from the housing with the power module in place.

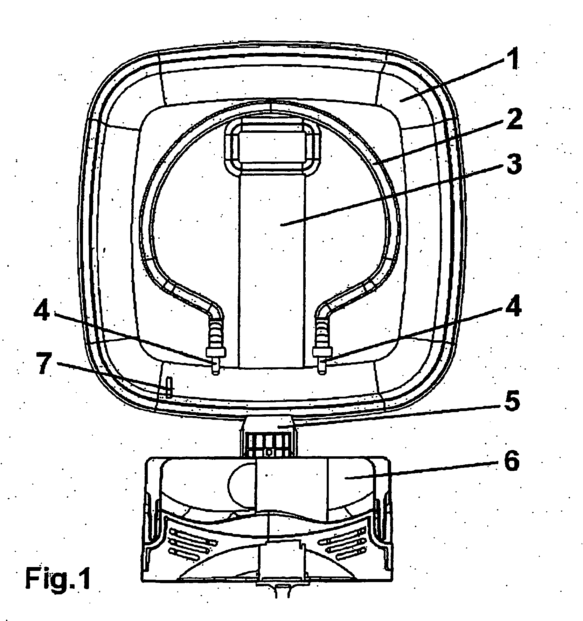

As shown in Figure 1 of the drawings, a removable bowl (1) for an electrical appliance, for example, a deep fat fryer, incorporates a conductive metal step or plate (3) welded or die-cast on the base of the removable bowl (1), to which is also attached a heating element (2). The two ends of the heating element (2) have terminals (4), which are engageable in openings (8, 9) in a removable connection module (6). The openings (8, 9), in the connection module (6), are covered and protected by a sliding cover (14), which is actuated by a lug (7), which is fixed or moulded on the base of the bowl (1), and which displaces the sliding cover (14) to open the openings (8, 9) to enable insertion of the terminals (4) thereinto during assembly of the removable bowl with the connection module.

The connection module (6) also includes a sensing plate (5), which engages with the conductive metal step (3), upon assembly. The sensing plate (5) being urged upwardly against the conductive metal step (3) by a spring (11), which not only supports the sensing plate in good alignment with the removable bowl, but also ensures that the plate (5) is in good thermally conductive contact with the conductive metal step (3) over a large surface area, to provide a reliable and consistent heat sensing. Within the housing of the plug module (6), at the rear of the sensing plate (5), are connected two temperature control devices, namely a thermostat (16) and a thermal cut-off fuse (15).

The arrangement of the removable bowl and plug module is such as to enable the appliance to be assembled and disassembled in any order, in that the openings (8, 9 and 10) for respectively receiving the terminals (4) and the lug (7) are L-shaped, so that the removable bowl (1) can either be inserted with the plug module (6) already in place in the fryer housing (17), or alternatively, the plug module (6) can be inserted subsequently to the bowl (1). This is achieved by providing L-shaped slots (8, 9 and 10), the slot (10) receiving the lug (7) on the removable bowl to open the slots (8 and 9) by linear movement of a sliding cover (14) within the plug module (6). The sliding cover (14) is spring-biased to automatically close the slots (8 and 9) when the lug (7) is removed from slot (10). Because of the L-shaping of these slots, the bowl (1) can be removed before, or after, the plug module (6), thereby facilitating assembly and disassembly during cleaning.

## Claims

1. An electrically-heated appliance comprising:
a housing (17) for receiving a removable bowl (1) having a heating element (2) secured thereto;
a conductive metal step (3) provided on the underside of the bowl (1), and
a connection module (6) removably locatable in the housing (17) for connection to said heating element (2), and incorporating a sensing plate (5) for engaging said conductive metal step (3),
**characterised by**:
a thermal cut-out fuse (15) and thermostat (16) mounted in said connection module (6) and thermally connected to said sensing plate (5) such that said sensing plate(5) provides heat sensing for both the thermal cut-out fuse (15) and thermostat (16).

2. An electrically-heated appliance as claimed in claim 1, in which the connection module (6) includes L-shaped slots (8, 9) for receiving connection terminals (4) of the heating element (2), which enable the connection terminals (4) to be inserted from above or from the side.

3. An electrically-heated appliance as claimed in claim 2, in which the connection module (6) includes a slidable cover (14), which covers the L-shaped slots (8, 9), when not connected to the removable bowl (1), which sliding cover (14) is displaceable by means of a lug (7) provided on the removable bowl (1), which lug displaces the sliding cover during assembly.

4. An electrically-heated appliance as claimed in claim 3, in which the lug (7) engages the sliding cover (14) through a slot (10) provided in the connection module (16).

5. An electrically-heated appliance as claimed in any preceding claim, in which spring-biasing means (11) are provided to urge the sensing plate (5) into intimate and good thermal contact with the conductive metal step (3).

## Patentansprüche

1. Elektrisch erhitztes Gerät mit:
einem Gehäuse (17) zum Aufnehmen einer abnehmbaren Schale (1) mit einem daran befestigten Heizelement (2);
einer leitenden Metallstufe (3), die an der Unterseite der Schale (1) vorgesehen ist, und
einem Verbindungsmodul (6), das zur Verbindung mit dem Heizelement (2) abnehmbar im Gehäuse (17) angeordnet werden kann und eine Abtastplatte (5) zum Eingriff mit der leitenden Metallstufe (3) beinhaltet,
**gekennzeichnet durch**:
eine Thermoabschaltsicherung (15) und einen Thermostaten (16), die im Verbindungsmodul (6) montiert sind und mit der Abtastplatte (5) thermisch verbunden sind, so dass die Abtastplatte (5) eine Wärmeabtastung sowohl für die Thermoabschaltsicherung (15) als auch den Thermostaten (16) bereitstellt.

2. Elektrisch erhitztes Gerät nach Anspruch 1, wobei das Verbindungsmodul (6) L-förmige Schlitze (8, 9) zum Aufnehmen von Verbindungsanschlüssen (4) des Heizelements (2) umfasst, die ermöglichen, dass die Verbindungsanschlüsse (4) von oben oder von der Seite eingesetzt werden.

3. Elektrisch erhitztes Gerät nach Anspruch 2, wobei das Verbindungsmodul (6) eine verschiebbare Abdeckung (14) umfasst, die die L-förmigen Schlitze (8, 9) bedeckt, wenn sie nicht mit der abnehmbaren Schale (1) verbunden sind, wobei die Gleitabdeckung (14) mittels eines Ansatzes (7) verschiebbar ist, der an der abnehmbaren Schale (1) vorgesehen ist, wobei der Ansatz die Gleitabdeckung während der Montage verschiebt.

4. Elektrisch erhitztes Gerät nach Anspruch 3, wobei der Ansatz (7) mit der Gleitabdeckung (14) durch einen Schlitz (10) in Eingriff kommt, der im Verbindungsmodul (16) vorgesehen ist.

5. Elektrisch erhitztes Gerät nach einem vorangehenden Anspruch, wobei Federvorbelastungseinrichtungen (11) vorgesehen sind, um die Abtastplatte (5) mit der leitenden Metallstufe (3) in innigen und guten Wärmekontakt zu drücken.

## Revendications

1. Appareil chauffé électriquement comprenant :
un logement (17) pour recevoir une cuve (1) amovible à laquelle un élément chauffant (2) est fixé ;
un épaulement de métal conducteur (3) prévu sur le dessous de la cuve (1) ; et
un module de connexion (6) pouvant être positionné de manière amovible dans le logement (17) pour une connexion audit élément chauffant (2), et incorporant une plaque de détection (5) pour une mise en prise avec ledit épaulement de métal conducteur (3),
**caractérisé par** :
un fusible de sectionnement thermique (15) et un thermostat (16) montés dans ledit module de connexion (6) et connectés thermiquement à ladite plaque de détection (5) de sorte que ladite plaque de détection (5) effectue une détection de chaleur à la fois pour le fusible de sectionnement thermique (15) et le thermostat (16).

2. Appareil chauffé électriquement selon la revendication 1, dans lequel le module de connexion (6) comprend des fentes (8, 9) en forme de L pour recevoir les bornes de connexion (4) de l'élément chauffant (2), qui permettent l'insertion des bornes de connexion (4) à partir du dessus ou à partir du côté.

3. Appareil chauffé électriquement selon la revendication 2, dans lequel le module de connexion (6) comprend un capot (14) coulissant, qui recouvre les fentes (8, 9) en forme de L, lorsqu'il n'est pas relié à la cuve (1) amovible, lequel capot (14) coulissant peut être déplacé au moyen d'une languette (7) prévue sur la cuve (1) amovible, laquelle languette déplace le capot coulissant pendant l'assemblage.

4. Appareil chauffé électriquement selon la revendication 3, dans lequel la languette (7) vient en prise avec le capot (14) coulissant à travers une fente (10) prévue dans le module de connexion (16).

5. Appareil chauffé électriquement selon l'une quelconque des revendications précédentes, dans lequel des moyens de sollicitation par ressorts (11) sont prévus pour pousser la plaque de détection (5) en bon contact thermique étroit avec l'épaulement de métal conducteur (3).
